# DEMANDE DE BREVET EUROPEEN

(11) **EP 1 211 223 A1**
(43) Date de publication de la demande: **05.06.2002**
(21) Numéro de dépôt: 01420231.1
(22) Date de dépôt: 03.12.2001
(51) Int. Cl.: C01B 33/02, C07F 7/16

(54) **Fabrication de silicium dopé par ajout de phosphore et destiné à la préparation des alkyl ou aryl-halogenosilanes**

(30) Priorité: 04.12.2000 FR 0015679
(71) Demandeur: Invensil, 73025 Chambery Cedex (FR)
(72) Inventeur: Margaria, Thomas, 74190 Passy (FR)
(74) Mandataire: Mougeot, Jean-Claude

(57) **Abrégé**

L'invention a pour objet un procédé de fabrication, par réduction carbothermique de la silice au four électrique et affinage, de silicium métallurgique, destiné à la fabrication des alkyl- ou aryl-halogénosilanes, avec une teneur en phosphore comprise entre 25 et 2500 ppm, dans lequel le phosphore est ajouté au four électrique sous forme d'un alliage Si-P élaboré préalablement, contenant plus de 75%, et de préférence plus de 90% de silicium.

## Description

### Domaine de l'invention

L'invention concerne la fabrication de silicium métallurgique dopé par ajout de phosphore, spécialement adapté à la fabrication des alkyl- ou aryl-halogénosilanes, destinés à la synthèse des silicones. On entend par silicium métallurgique le silicium provenant de la réduction carbothermique, au four électrique à arc, d'un minerai à base de silice, comme le quartz, par un réducteur carboné. Le silicium ainsi obtenu est ensuite affiné en poche à l'aide d'un gaz tel que l'oxygène, le chlore l'argon ou l'azote, de manière à ajuster les teneurs en impuretés diverses, notamment en fer, aluminium et calcium.

### Etat de la technique

La synthèse des alkyl- ou aryl-halogénosilanes par réaction entre 250 et 350°C d'un hydrocarbure halogéné, par exemple le chlorure de méthyle, sur le silicium est connue depuis le brevet US 2380995 délivré en 1945 à E.G. ROCHOW.

Cette réaction a atteint un développement industriel important pour la fabrication des silicones. Pour augmenter la productivité des installations et la sélectivité de la réaction dont le produit attendu est le dichlorodiméthylsilane, les fabricants de silicones peuvent être amenés à utiliser comme matière première, du silicium métallurgique dopé en phosphore . Les procédés de fabrication connus pour ce type de produit consistent à ajouter le phosphore lors de la fabrication du silicium.

Ainsi le brevet EP 272860 (Dow Corning) décrit la fabrication d'un silicium contenant 100 à 2500 ppm de phosphore par utilisation de matières premières contenant du phosphore, ou par ajout à la charge introduite dans le four électrique d'un composé phosphoré, tel que le phosphate de chaux ou le phosphure d'aluminium, de calcium, de cuivre ou de fer,. Le brevet EP 273635 de la même société décrit la fabrication d'un silicium contenant 25 à 2500 ppm de phosphore par ajout d'un composé du phosphore, notamment un phosphate tricalcique ou un phosphure d'aluminium, de calcium, de cuivre ou de fer, lors d'une opération d'affinage en poche en aval du four.

### Objet de l'invention

L'invention a pour objet un procédé de fabrication, par réduction carbothermique de la silice au four électrique, de silicium métallurgique, destiné à la fabrication des alkyl- ou aryl-halogénosilanes, avec une teneur en phosphore comprise entre 25 et 2500 ppm, dans lequel le phosphore est ajouté au four électrique sous forme d'un alliage Si-P élaboré préalablement, contenant plus de 75%, et de préférence plus de 90% de silicium.

L'alliage Si-P est, de préférence, élaboré en poche par introduction de ferro-phosphore, d'un composé oxydé de phosphore ou de phosphate tricalcique dans du silicium liquide.

### Description de l'invention

L'invention a pour origine la constatation suivante faite par la demanderesse. L'ajout à la charge d'un four produisant du silicium, de phosphate naturel tricalcique Ca₃(PO₄)₂, selon l'enseignement du brevet EP 272860 conduit bien à la production de silicium dopé en phosphore, mais avec un rendement en phosphore très faible, de l'ordre de 2,5% seulement. On constate en effet que le phosphore introduit au four se répartit non seulement entre le silicium métal produit et les microparticules de silice présentes dans les fumées, mais aussi, de façon plus inattendue, dans les gaz du four sous forme de vapeur de P₂O₃ pour une fraction non négligeable. Il s'ensuit une réelle difficulté à maintenir un titre en phosphore constant sur la production de silicium, et d'autre part une surcharge inacceptable en P₂O₅ de la microsilice coproduite dans le procédé par filtration des fumées du four, et utilisée dans diverses applications, notamment comme additif aux bétons.

Le procédé selon l'invention consiste, au contraire, à opérer en deux temps. Dans un premier temps, au cours d'une opération de métallurgie secondaire en poche, on fait la synthèse d'un alliage silicium-phosphore à plus de 75%, et de préférence plus de 90% de silicium, par ajout soit de ferro-phosphore, soit d'un composé oxydé du phosphore, soit de phosphate tricalcique . Dans cette opération on peut viser par exemple un titre en phosphore de l'alliage compris entre 0,25 et 2,5%, et préférentiellement entre 0,5 et 1,2%.

Dans un second temps, on fabrique au four le silicium dopé en phosphore que l'on destine à la fabrication des alkyl- ou aryl-halogénosilanes, en introduisant l'alliage Si-P en morceaux obtenu précédemment en même temps que les matières premières. Compte tenu des teneurs en phosphore de l'alliage intermédiaire Si-P utilisé, le rapport de masse entre l'alliage Si-P mis en oeuvre et le silicium dopé produit peut se situer entre 0,5 et 5% , ce qui constitue un taux de recyclage tout à fait acceptable sur un four produisant du silicium. Le silicium obtenu peut subir ensuite un affinage oxydant pour amener le taux de calcium entre 0,03 et 0,10%, et le taux d'aluminium entre 0,08 et 0,40%.

Le procédé selon l'invention permet d'obtenir au four un rendement phosphore stable dans le temps, de l'ordre de 30 à 40%, et de ne pas trop altérer la qualité de la microsilice coproduite.

### Exemples

### Exemple 1

Sur un four de 11 MW fabriquant du silicium métal, on ajoute à la charge du four pendant une semaine du phosphate naturel Ca₃(PO₄)₂ aggloméré en boulets avec de la mélasse et de la chaux ; ces boulets contenaient 93% de Ca₃(PO₄)₂ ; les ajouts sont faits au four par doses de 20 kg de boulets ajoutés toutes les heures directement dans le godet de la chargeuse du four.

Avant l'introduction du phosphate, le titre moyen en phosphore du silicium était de 12 ppm et celui de la microsilice de 35 ppm. 24 h après introduction du phosphate, ce titre moyen était de 101 ppm (écart type : 17 ppm) pour le silicium, et de 8300 ppm, soit 0,83% ou 1,90% de P₂O₅ pour la microsilice, teneur inacceptable pour les utilisations de ce produit. Avec une production journalière d'environ 25 t de silicium, on constate un rendement matière en phosphore de 2,5%.

### Exemple 2

On coule en poche du silicium brut de four ; ce silicium liquide en poche qui n'a été soumis à aucun traitement d'affinage est recoulé dans une seconde poche pour permettre un décrassage efficace. Un prélèvement pour analyse sur ce métal liquide donne un titre de 12 ppm de phosphore. Ensuite, dans ce silicium en fusion, on injecte dans un courant d'azote du phosphate de calcium à la dose de 50 kg de Ca₃(PO₄)₂ par tonne de silicium liquide. Le métal est ensuite coulé, puis échantillonné et analysé.

On obtient une teneur en phosphore de 0,87% (8700 ppm), soit un rendement en phosphore de 87 %.

Les lingots obtenus sont ensuite concassés à une granulométrie inférieure à 120 mm pour servir dans l'exemple suivant.

### Exemple 3

Sur le même four de 11 MW de l'exemple N°1, on ajoute à la charge du four pendant une semaine l'alliage silicium phosphore fabriqué à l'exemple 2. L'ajout est fait par doses de 30 kg d'alliage Si-P ajoutées toutes les heures directement dans le godet de la chargeuse du four.

Avant introduction de l'alliage, on mesure un titre moyen de 12 ppm pour le silicium et de 32 ppm pour la microsilice. 24 h après l'introduction de l'alliage, on obtient un titre moyen de 104 ppm pour le silicium (écart type : 8 ppm), et de 270 ppm pour la microsilice, niveau nettement plus acceptable par les clients de ce produit. Avec une production journalière d'environ 25 t de silicium, on constate un rendement matière en phosphore de 36,7% pour un taux de recyclage du silicium de 2,9%.

### Exemple 4

Le métal produit au cours de l'essai décrit dans l'exemple 3 fait l'objet d'un affinage en poches en vue d'en éliminer l'aluminium et le calcium et vérifier ainsi que l'on conserve la teneur en phosphore existant dans le métal brut sortie four.

Avant affinage, on mesure 1,23% de calcium, 0,42% d'aluminium, et 104 ppm de phosphore. Après affinage, les teneurs sont respectivement 0,07% de calcium, 0,12% d'aluminium, et 98 ppm de phosphore, ce qui montre que la teneur en phosphore n'est pratiquement pas affectée par l'affinage.

## Revendications

1. Procédé de fabrication, par réduction carbothermique de la silice au four électrique, de silicium métallurgique dopé au phosphore destiné à la fabrication des alkyl- ou aryl-halogénosilanes, **caractérisé en ce que** le phosphore est ajouté au four sous forme d'un alliage Si-P élaboré préalablement, contenant plus de 75%, et de préférence plus de 90% de silicium.

2. Procédé selon la revendication 1, **caractérisé en ce que** la teneur pondérale en phosphore du silicium métallurgique est comprise entre 25 et 2500 ppm de phosphore.

3. Procédé selon la revendication 2, **caractérisé par** une teneur pondérale en phosphore de l'alliage Si-P élaboré préalablement est comprise entre 0,25 et 2,5%, et préférentiellement entre 0,5 et 1,2%.

4. Procédé selon l'une des revendications 1 à 3, **caractérisé par le fait que** l'alliage Si-P est préparé en poche par une opération de métallurgie secondaire.

5. Procédé selon la revendication 4 **caractérisé en ce que** l'apport de phosphore destiné à la fabrication de l'alliage Si-P est fait à partir de ferro-phosphore.

6. Procédé selon la revendication 4 **caractérisé en ce que** l'apport de phosphore destiné à la fabrication de l'alliage Si-P est fait à partir d'un composé oxydé du phosphore.

7. Procédé selon la revendication 6 **caractérisé par le fait que** l'apport de phosphore destiné à la fabrication de l'alliage Si-P est fait à partir de phosphate tricalcique.

8. Procédé selon l'une des revendications précédentes **caractérisé par le fait qu'**il est complété in fine par un affinage oxydant en vue de ramener la teneur en calcium entre 0,03% à 0,10% et la teneur en aluminium entre 0,08% et 0,40%.
